(19) Europäisches Patentamt
European Patent Office
Office européen des brevets

(11) **EP 3 914 005 A1**

(12) **EUROPEAN PATENT APPLICATION**
published in accordance with Art. 153(4) EPC

(43) Date of publication:
**24.11.2021 Bulletin 2021/47**

(21) Application number: **19910672.5**

(22) Date of filing: **16.01.2019**

(51) Int Cl.:
**H04W 72/04** (2009.01)     **H04W 28/16** (2009.01)
**H04W 72/12** (2009.01)

(86) International application number:
**PCT/JP2019/001153**

(87) International publication number:
**WO 2020/148840 (23.07.2020 Gazette 2020/30)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **NTT DOCOMO, INC.**
**Chiyoda-Ku**
**Tokyo 100-6150 (JP)**

(72) Inventors:
• **MATSUMURA, Yuki**
  **Tokyo 100-6150 (JP)**

• **NAGATA, Satoshi**
  **Tokyo 100-6150 (JP)**
• **WANG, Runxin**
  **Beijing 100190 (CN)**
• **WANG, Jing**
  **Beijing 100190 (CN)**
• **HOU, Xiaolin**
  **Beijing 100190 (CN)**

(74) Representative: **Hoffmann Eitle**
**Patent- und Rechtsanwälte PartmbB**
**Arabellastraße 30**
**81925 München (DE)**

(54) **USER TERMINAL AND WIRELESS COMMUNICATION METHOD**

(57)    In order to appropriately perform transmission of uplink control information even when a plurality of TRPs or panels are used, an aspect of a user terminal according to the present disclosure includes: a transmitting section that transmits uplink control information corresponding to a DL signal transmitted from each of a plurality of transmission/reception points; and a control section that determines at least one of resource allocation order for the uplink control information and priority of the uplink control information, based on a type of the uplink control information and a corresponding one of the plurality of transmission/reception points.

FIG. 2

EP 3 914 005 A1

**Description**

Technical Field

The present disclosure relates to a user terminal and a radio communication method in next-generation mobile communication systems.

Background Art

In Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (e.g., referred to as "5th generation mobile communication system (5G))," "5G+ (plus)," "New Radio (NR)," "3GPP Rel. 15 (or later versions)," and so on) are also under study.

In existing LTE systems (for example, LTE Rel. 8 to Rel. 13), a user terminal (UE (User Equipment)) controls reception of a downlink shared channel (for example, a Physical Downlink Shared Channel (PDSCH)), based on downlink control information (also referred to as DCI, DL assignment, or the like) from a radio base station. The UE transmits uplink control information (UCI) by using at least one of a UL data channel (for example, a Physical Uplink Shared Channel (PUSCH)) and a UL control channel (for example, a Physical Uplink Control Channel (PUCCH)).

The uplink control information includes a transmission confirmation signal (for example, an HARQ-ACK) corresponding to a DL signal (for example, a PDSCH), channel state information (for example, Channel State Information (CSI)), a scheduling request (for example, a Scheduling Request (SR)), and the like. For example, the UE measures a certain reference signal, and transmits channel state information (CSI) to a base station.

Citation List

Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

Summary of Invention

Technical Problem

For future radio communication systems (for example, NR), a scheme in which each of a plurality of transmission/reception points (TRPs) (multi-TRP) or a plurality of panels (multi-panel) performs non-coherent transmission to the UE has been under study.

In the multi-TRP/multi-panel scenario, it is assumed that a plurality of CSI types are reported for the sake of dynamic scheduling. Depending on a CSI type, the information type, size, and the like for reporting may vary.

However, when uplink control information (HARQ-ACK, CSI, or the like) corresponding to a DL signal from a plurality of TRPs is transmitted, how to control transmission operation (for example, resource allocation, determination of transmission priority, or the like) of each piece of the uplink control information presents a problem.

In the light of this, the present disclosure has an object to provide a user terminal and a radio communication method that enable appropriate transmission of uplink control information even when a plurality of TRPs or panels are used.

Solution to Problem

A user terminal according to an aspect of the present disclosure includes: a transmitting section that transmits uplink control information corresponding to a DL signal transmitted from each of a plurality of transmission/reception points; and a control section that determines at least one of resource allocation order for the uplink control information and priority of the uplink control information, based on a type of the uplink control information and a corresponding one of the plurality of transmission/reception points.

Advantageous Effects of Invention

According to an aspect of the present disclosure, even when a plurality of TRPs or panels are used, transmission of uplink control information can be appropriately performed.

Brief Description of Drawings

FIG. 1A and FIG. 1B are each a diagram to show an example of a case in which a PDSCH is transmitted from a plurality of transmission/reception points;
FIG. 2 is a diagram to show an example of UCI transmission using a PUSCH;
FIG. 3 is a diagram to show an example of CSI report;
FIG. 4 is a diagram to show an example of a schematic structure of a radio communication system according to one embodiment;
FIG. 5 is a diagram to show an example of a structure of a base station according to one embodiment;
FIG. 6 is a diagram to show an example of a structure of a user terminal according to one embodiment; and
FIG. 7 is a diagram to show an example of a hardware structure of the base station and the user terminal according to one embodiment.

Description of Embodiments

For future radio communication systems (for example, Rel. 16 or later versions), a scheme in which non-coherent DL (for example, PDSCH) transmission is performed from each of a plurality of transmission/reception points has been under study. The transmission performed in cooperation with DL signals (or DL channels) being non-coherent from the plurality of transmission/reception points may be referred to as NCJT (Non-Coherent Joint Transmission). In this specification, the transmission/reception point (TRP) may be interpreted as a transmission point, a reception point, a panel, a cell, or a DMRS port group.

It is also assumed that scheduling of a non-coherent PDSCH transmitted from each of the plurality of transmission/reception points is controlled by using one or more pieces of DCI. As an example, in order to schedule the PDSCH transmitted from the plurality of transmission/reception points, a plurality of downlink control channels (or pieces of DCI) are used.

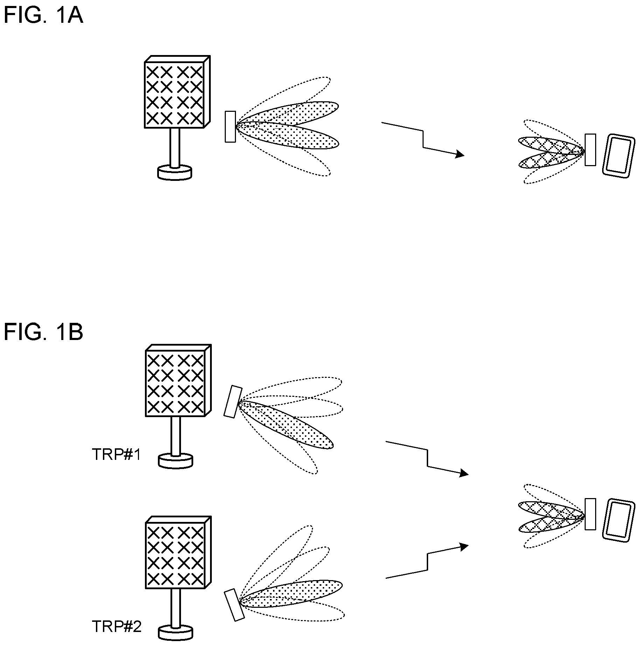

FIG. 1A shows a case in which the PDSCH (for example, the PDSCH using NCJT) or a reference signal is transmitted from each of a plurality of panels to the UE, and FIG. 1B shows a case in which the PDSCH (for example, the PDSCH using NCJT) or a reference signal is transmitted from each of a plurality of transmission/reception points (TRP) to the UE.

The UE feeds back (or reports), to a network (or a base station, a TRP), an HARQ-ACK corresponding to the PDSCH and channel state information (CSI) as uplink control information, the PDSCH and channel state information corresponding to the reference signal transmitted from the TRP.

(CSI)

The UE may measure a channel state by using a channel state information reference signal (CSI-RS), a synchronization signal/broadcast channel (SS/PBCH (Synchronization Signal/Physical Broadcast Channel)) block, a synchronization signal (SS), a demodulation reference signal (DMRS), or the like.

A CSI-RS resource may include at least one of a non zero power (NZP) CSI-RS resource, a zero power (ZP) CSI-RS resource, and a CSI-IM (Interference Measurement) resource.

A resource for measuring a signal component for the CSI may be referred to as a signal measurement resource (SMR). The SMR may include, for example, an NZP CSI-RS resource, an SSB, and the like for channel measurement.

A resource for measuring an interference component for the CSI may be referred to as an interference measurement resource (IMR). The IMR may include, for example, at least one of an NZP CSI-RS resource, an SSB, a ZP CSI-RS resource, and a CSI-IM resource for interference measurement.

The SS/PBCH block is a block including a synchronization signal (for example, a primary synchronization signal (PSS) or a secondary synchronization signal (SSS)) and a PBCH (and its corresponding DMRS), and may be referred to as an SS block (SSB) or the like.

Note that the CSI may include at least one of a channel quality indicator (CQI), a precoding matrix indicator (PMI), a CSI-RS resource indicator (CRI), an SS/PBCH block resource indicator (SSBRI (SS/PBCH Block Indicator)), a layer indicator (LI), a rank indicator (RI), L1-RSRP (reference signal received power in layer 1 (Layer 1 Reference Signal Received Power)), L1-RSRQ (Reference Signal Received Quality), an L1-SINR (Signal to Interference plus Noise Ratio), an L1-SNR (Signal to Noise Ratio), and the like.

The CSI may include a plurality of parts. CSI part 1 may include information (for example, the RI) having relatively a small number of bits. CSI part 2 may include information (for example, the CQI) having a relatively large number of bits, such as information determined based on CSI part 1.

For example, CSI part 1 may include information having priority (higher priority) that is higher than that of CSI part 2. For example, CSI part 2 may be configured to include information that presupposes the information included in CSI part 1 (or information required based on the information included in CSI part 1). As an example, CSI part 1 may be configured to include information (for example, a rank indicator (RI)) indicating the number of ranks (or the number of layers), and CSI part 2 may be configured to include information (for example, channel quality information (CQI)) indicating channel quality. In this case, CSI part 2 may be configured to include the CQI presupposing the rank included in CSI part 1.

Note that the information indicating the number of ranks may be the RI in existing LTE systems, and the information indicating the channel quality may be the CQI in existing LTE systems. As a matter of course, the information included in CSI part 1 or CSI part 2 is not limited to the above. CSI part 1 may be configured to include information related to the rank and the PMI, and CSI part 2 may be configured to include information related to the CQI. Alternatively, CSI part 1 may be configured to include information related to the rank, and CSI part 2 may be configured to include information related to the PMI and the CQI.

The information amount (or the size, the number of bits) of CSI part 1 may be defined to be smaller than the information amount of CSI part 2. Alternatively, PUCCH formats applied to CSI part 1 and CSI part 2 may be configured to be different from each other. Note that a plurality of types of CSI may include two types, namely CSI part 1 and CSI part 2, or may include three or more types of CSI parts.

The CSI may be categorized into some CSI types. Depending on a CSI type, the information type, the size, and the like for reporting may vary. For example, a CSI type that is configured for performing communication using a single beam (also referred to as type 1 (type I) CSI, CSI for a single beam, or the like) and a CSI type that is configured for performing communication using a multi-beam (also referred to as type 2 (type II) CSI, CSI for a multi-beam, or the like) may be defined. The usage of the CSI type is not limited to the above.

Measurement results (for example, CSI) reported for beam management (beam management) may be referred to as beam measurement, beam measurement results, beam measurement report, or the like.

As a feedback method of the CSI, a periodic CSI (P-CSI) report, an aperiodic CSI (A-CSI) report, a semi-persistent CSI (SP-CSI) report, and the like have been under study.

The UE may receive notification of CSI measurement configuration information by using higher layer signaling or physical layer signaling, or a combination of these.

In the present disclosure, the higher layer signaling may be, for example, any one of RRC (Radio Resource Control) signaling, MAC (Medium Access Control) signaling, broadcast information, and the like, or a combination of these.

The MAC signaling may be, for example, a MAC control element (MAC CE) or a MAC PDU (Protocol Data Unit). The broadcast information may be, for example, a master information block (MIB), a system information block (SIB), minimum system information (RMSI (Remaining Minimum System Information)), other system information (OSI), or the like.

The physical layer signaling may be, for example, downlink control information (DCI).

The CSI measurement configuration information may be, for example, configured by using an RRC information element "CSI-MeasConfig." The CSI measurement configuration information may include CSI resource configuration information (RRC information element "CSI-ResourceConfig"), CSI report configuration information (RRC information element "CSI-ReportConfig"), and the like.

In this manner, when a plurality of CSI types are supported in communication using a plurality of TRPs, how to control transmission of the CSI presents a problem. For example, when pieces of CSI corresponding to different TRPs or transmission timings of different CSI types collide with each other, transmission operation of the CSI needs to be appropriately controlled.

<UCI on PUSCH>

In the existing LTE systems (for example, LTE Rel. 8 to Rel. 13), when transmission timing of uplink data (for example, a UL-SCH (Uplink-Shared Channel)) and transmission timing of uplink control information (UCI) overlap, the UE performs transmission of the uplink data and the UCI by using the uplink shared channel (PUSCH) (also referred to as UCI piggyback on PUSCH, or UCI on PUSCH).

In NR as well, in a similar manner to the existing LTE systems, it is also conceivable that the UCI on PUSCH is used. However, when UCI transmission using the PUSCH is supported in communication using a plurality of TRPs, how to control resource allocation of the UCI for the PUSCH and the like presents a problem.

As an aspect of the present disclosure, the inventors of the present invention studied how to control the transmission operation of the UCI in communication using a plurality of TRPs (or panels), and came up with the idea of appropriately performing the UCI transmission when a plurality of TRPs are used.

The present embodiments will be described below in detail with reference to the drawings. The embodiments may be individually used or may be used in combination. Note that the transmission/reception point described below may be interpreted as a panel. In the following description, the TRP may be interpreted as each PDSCH, DMRS port group, codeword (CW), or transport block (TB) having different Quasi-Co-Locations (QCLs).

(First Aspect)

In a first aspect, resource allocation operation of uplink control information (hereinafter also referred to as UCI) is controlled based at least on a type of UCI. The following description describes a case in which the UCI is multiplexed on the uplink shared channel (PUSCH) (UCI on PUSCH), but the present aspect may also be applied to a case in which the UCI is multiplexed on a resource other than the PUSCH.

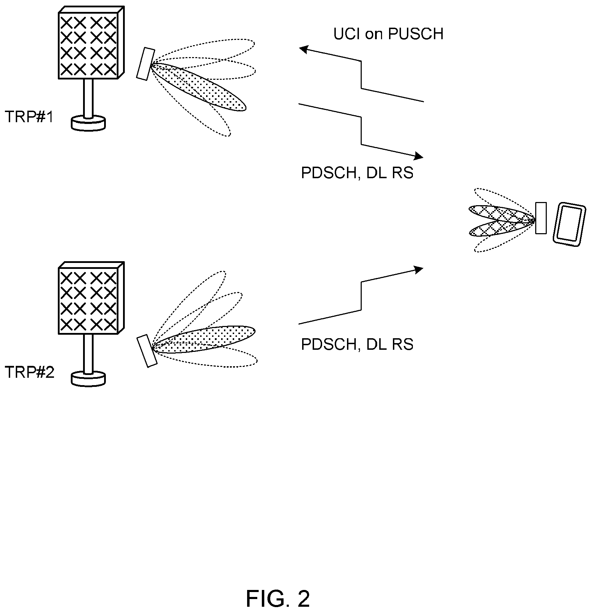

FIG. 2 shows an example of a case in which UCI corresponding to DL transmission (for example, a PDSCH, a reference signal (DL RS)) transmitted from each of two TRPs (for example, TRP #1 and TRP #2) is multiplexed on the PUSCH and transmitted. Note that the number of TRPs used for communication is not limited to this. The description herein illustrates a case in which the UCI is multiplexed on the PUSCH transmitted to a certain TRP (for example, TRP #1). However, this is not restrictive. The UCI may be multiplexed on the PUSCH transmitted to TRP #2.

The UE controls resource allocation operation, based on a type of the UCI and the TRP, when the UCI is multiplexed on the PUSCH and transmitted. Here, description is given by taking an HARQ-ACK having up to a certain bit(s), an HARQ-ACK having more than a certain bit(s), first CSI, and second CSI as examples of the UCI. However, the types of the UCI are not limited to these. The certain bit(s) may be, for example, 2 bits. The first CSI may be CSI part 1, and the second CSI may be CSI part 2.

For example, the UE performs transmission of at least one of an HARQ-ACK (A1) having up to 2 bits and an HARQ-ACK (B1) having more than 2 bits for the PDSCH transmitted from TRP #1. The UE performs transmission of at least one of CSI part 1 (C1) and CSI part 2 (D1) for a reference signal (for example, at least one of a CSI-RS and an SSB/PBCH block) transmitted from TRP #1.

The UE performs transmission of at least one of an HARQ-ACK (A2) having up to 2 bits and an HARQ-ACK (B2) having more than 2 bits for the PDSCH transmitted from TRP #2. The UE performs transmission of at least one of CSI part 1 (C2) and CSI part 2 (D2) for a reference signal (for example, at least one of the CSI-RS and the SSB/PBCH block) transmitted from TRP #1.

The UE may perform CSI report corresponding to each TRP by using one piece of UCI. In this case, it is only necessary that the resource allocation operation for the UCI for the PUSCH be controlled based on a type of the UCI and the TRP. The UE may apply any one of allocation operations 1 to 3 described below as the allocation operation of the UCI.

The following description illustrates a case in which the resource allocation operation of the UCI is controlled separately for resource allocation order (Resources assignment order) and information assignment order (assignment order of information). The resource allocation order may be interpreted as order of resource allocation securing for UCI or order of resource allocation reservation. The information assignment order may be interpreted as order of mapping of UCI or order of actual multiplexing. The resource allocation order (allocation procedure of the resource) and the information assignment order (assignment order of information) for a certain UCI type may be simultaneously performed.

In the following description, the type and the data of each piece of UCI are illustrated as follows.

A1: HARQ-ACK having up to 2 bits corresponding to TRP #1
A2: HARQ-ACK having up to 2 bits corresponding to TRP #2
B1: HARQ-ACK having more than 2 bits corresponding to TRP #1
B2: HARQ-ACK having more than 2 bits corresponding to TRP #2
C1 CSI part 1 corresponding to TRP #1
C2: CSI part 1 corresponding to TRP #2
D1: CSI part 2 corresponding to TRP #1
D2: CSI part 2 corresponding to TRP #2
E: Data (for example, the UL-SCH)

<Resource Allocation Operation 1>

The UE controls the resource allocation according to the following order (or priority).

A1 > A2 > B1 > B2 > C1 > C2 > D1 > D2 > E

The UE controls the information assignment according to the following order (or priority).

B1 > B2 > C1 > C2 > D1 > D2 > E > A1 > A2

For example, first, the UE reserves allocation resource (for example, a resource element (RE)) for transmission of the HARQ-ACK (A1) having up to 2 bits corresponding to a certain TRP (for example, a TRP (here, TRP #1) having a relatively small index). Next, the UE reserves allocation resource for transmission of the HARQ-ACK (A2) having up to 2 bits corresponding to another TRP (here, TRP #2). Resource securing for transmission of the HARQ-ACK having up to 2 bits may be referred to as step 1.

Next, the UE reserves the allocation resource for transmission of the HARQ-ACK (B1) having more than 2 bits corresponding to a certain TRP (here, TRP #1). Note that the UE may map the HARQ-ACK (B1) to the resource after the allocation of the resource or simultaneously with the resource allocation. Next, the allocation resource is reserved for transmission of the HARQ-ACK (B2) having more than 2 bits corresponding to another TRP (here, TRP #2). Note that the UE may map the HARQ-ACK (B2) to the resource after the allocation of the resource or simultaneously with the resource allocation.

In this manner, when mapping to the resource is performed simultaneously with the resource allocation, the resource allocation and mapping to the resource may be controlled as one operation (this similarly applies to the following description). The resource securing for transmission of the HARQ-ACK having more than 2 bits and the mapping to the resource (or the mapping of the HARQ-ACK having more than 2 bits) to the resource may be referred to as step 2. The HARQ-ACK having more than 2 bits may be mapped with its data being subjected to rate matching. The HARQ-ACK having more than 2 bits may be mapped with its data being subjected to rate matching.

The resource securing of the HARQ-ACK having more than 2 bits and the mapping to the resource (or the mapping of the HARQ-ACK having more than 2 bits to the resource) may be performed for the resource except for the resource (for example, the RE) reserved for the HARQ-ACK having up to 2 bits in step 1.

Next, the UE reserves the allocation resource for CSI part 1 (C1) corresponding to the certain TRP (here, TRP #1). Note that the UE may map the CSI part 1 (C1) to the resource after the allocation of the resource or simultaneously with the resource allocation. Next, the allocation resource is reserved for CSI part 1 (C2) corresponding to another TRP (here, TRP #2). Note that the UE may map the CSI part 1 (C2) to the resource after the allocation of the resource or simultaneously with the resource allocation. CSI part 1 may be mapped with its data being subjected to rate matching.

The resource securing of CSI part 1 and the mapping to the resource (or the mapping of CSI part 1 to the resource) may be performed for the resource except for the resource (for example, the RE) reserved for the HARQ-ACK having up to 2 bits in step 1. In this manner, CSI part 1 can be prevented from being punctured by the HARQ-ACK having up to 2 bits mapped in a later process.

Next, the UE reserves the allocation resource for CSI part 2 (D1) corresponding to the certain TRP (here, TRP #1). Note that the UE may map the CSI part 2 (D1) to the resource after the allocation of the resource or simultaneously with the resource allocation. Next, the allocation resource is reserved for CSI part 2 (D2) corresponding to another TRP (here, TRP #2). Note that the UE may map the CSI part 2 (D2) to the resource after the allocation of the resource or simultaneously with the resource allocation. CSI part 2 may be mapped with its data being subjected to rate matching.

The resource securing of CSI part 2 and the mapping to the resource (or the mapping of CSI part 2 to the resource) may be performed for the resource including the resource (for example, the RE) reserved for the HARQ-ACK having up to 2 bits in step 1. In this manner, CSI part 2 can be allowed to be punctured by the HARQ-ACK having up to 2 bits mapped in a later process (for example, step 5).

The resource securing of the CSI (for example, CSI part 1 and CSI part 2) and the mapping to the resource (or the mapping of the CSI to the resource) may be referred to as step 3. The UE prioritizes a certain CSI type even when there is CSI corresponding to a plurality of TRPs in the allocation operation of the CSI. In other words, the UE controls the allocation operation of the CSI, based on a CSI type, regardless of a TRP index or the like (for example, prioritizes CSI part 1 over CSI part 2).

Next, the UE reserves the allocation resource for the data (E) corresponding to the certain TRP (here, TRP #1). Note that the UE may map the data (E) to the resource after the allocation of the resource or simultaneously with the resource allocation.

The resource securing of the data and the mapping to the resource (or the mapping of the data to the resource) may be performed for the resource including the resource (for example, the RE) reserved for the HARQ-ACK having up to 2 bits in step 1. In this manner, the data can be allowed to be punctured by the HARQ-ACK having up to 2 bits mapped in a later process (for example, step 5).

The resource securing of the data and the mapping to the resource (or the mapping of the data to the resource) may be referred to as step 4.

Next, the UE maps the HARQ-ACK (A1) having up to 2 bits corresponding to a certain TRP (here, TRP #1) to the allocation resource that is reserved (or secured) in advance. Next, the UE maps the HARQ-ACK (A2) having up to 2 bits corresponding to another TRP (here, TRP #2) to the allocation resource that is reserved (or secured) in advance.

Note that the resource allocation operation may be selected as appropriate according to a UCI type to be transmitted. For example, when transmission of the HARQ-ACK having up to 2 bits is not performed, only step 5, or step 1 and step 5 may be omitted. When transmission of the HARQ-ACK having more than 2 bits is not performed, step 2 may be omitted.

When the resource allocation of CSI part 2 and the data is allowed for the resource reserved for the HARQ-ACK having up to 2 bits, the resource for transmission of the HARQ-ACK (A1, A2) having up to 2 bits can be used for the CSI part 2 (D1, D2) and the data (E).

<Resource Allocation Operation 2>

The UE controls the resource allocation according to the following order (or priority).

A1 > B1 > A2 > B2 > C1 > C2 > D1 > D2 > E

The UE controls the information assignment according to the following order (or priority).

B1 > B2 > C1 > C2 > D1 > D2 > E > A1 > A2

For example, first, the UE reserves allocation resource (for example, a resource element (RE)) for transmission of the HARQ-ACK (A1) having up to 2 bits corresponding to a certain TRP (for example, a TRP (here, TRP #1) having a relatively small index).

Next, the UE reserves the allocation resource for transmission of the HARQ-ACK (B1) having more than 2 bits corresponding to a certain TRP (here, TRP #1). Note that the UE may map the HARQ-ACK (B1) to the resource after the allocation of the resource or simultaneously with the resource allocation.

The resource securing of the HARQ-ACK (B1) having more than 2 bits and the mapping to the resource may be performed for the resource except for the resource (for example, the RE) reserved for the HARQ-ACK (A1) having up to 2 bits.

Next, the UE reserves the allocation resource for transmission of the HARQ-ACK (A2) having up to 2 bits corresponding to another TRP (here, TRP #2). The resource securing of the HARQ-ACK (A2) having up to 2 bits may be performed for the resource except for the resource reserved for the HARQ-ACK (A1) having up to 2 bits. The resource securing of the HARQ-ACK (A2) having up to 2 bits may be performed for the resource except for the resource reserved or mapped for the HARQ-ACK (B1) having more than 2 bits. In this manner, the HARQ-ACK can be prevented from being punctured.

Next, the UE reserves the allocation resource for transmission of the HARQ-ACK (B2) having more than 2 bits corresponding to another TRP (here, TRP #2). Note that the UE may map the HARQ-ACK (B2) to the resource after the allocation of the resource or simultaneously with the resource allocation.

The resource securing of the HARQ-ACK (B1) having more than 2 bits and the mapping to the resource may be performed for the resource except for the resource reserved for the HARQ-ACK (A1, A2) having up to 2 bits and the resource reserved or mapped for the HARQ-ACK (B1) having more than 2 bits.

The resource allocation operation for CSI part 1 (C1) corresponding to TRP #1, CSI part 1 (C2) corresponding to TRP #2, CSI part 2 (D1) corresponding to TRP #1, CSI part 2 (D2) corresponding to TRP #2, and the data (E) may be performed in a manner similar to resource allocation operation 1.

In this case, when the resource allocation of CSI part 2 and the data is allowed for the resource reserved for the HARQ-ACK having up to 2 bits, the resource for transmission of the HARQ-ACK (A1, A2) having up to 2 bits can be used for the CSI part 2 (D1, D2) and the data (E). In contrast, the resource for transmission of the HARQ-ACK (A1, A2) having more than 2 bits cannot be used.

<Resource Allocation Operation 3>

The UE controls the resource allocation according to the following order (or priority).

A1/2 > B1 > B2 > C1 > C2 > D1 > D2 > E

The UE controls the information assignment according to the following order (or priority).

B1 > B2 > C1 > C2 > D1 > D2 > E > A1/2

For example, first, the UE reserves the allocation resource for transmission of the HARQ-ACK (A1 and A2) having up to 2 bits corresponding to a certain TRP (here, TRP #1) and another TRP (here, TRP #2). In other words, the UE secures the allocation resource with the HARQ-ACKs each having up to 2 bits corresponding to all of the TRPs (here, TRP #1 and TRP #2) being one HARQ-ACK, regardless of a TRP index (or without configuring priority between the TRPs).

Subsequently, the resource allocation operation for the HARQ-ACK (B1) having more than 2 bits corresponding to TRP #1, the HARQ-ACK (B2) having more than 2 bits corresponding to TRP #1, CSI part 1 (C1) corresponding to TRP #1, CSI part 1 (C2) corresponding to TRP #2, CSI part 2 (D1) corresponding to TRP #1, CSI part 2 (D2) corresponding to TRP #2, and the data (E) is performed. The resource allocation operation for B1, B2, C1, C2, D1, D2, and E may be performed in a manner similar to resource allocation operation 1.

Note that the resource allocation operation for other pieces of UCI different from the HARQ-ACKs (A1, A2) each having up to 2 bits may be controlled as one piece of UCI, regardless of a TRP index.

(Second Aspect)

In a second aspect, priority of the channel state information (CSI) is controlled based on a type of a TRP and uplink control information (for example, channel state information). Note that a channel for multiplexing the CSI may be an uplink control channel (for example, the PUCCH), or may be an uplink shared channel (for example, the PUSCH).

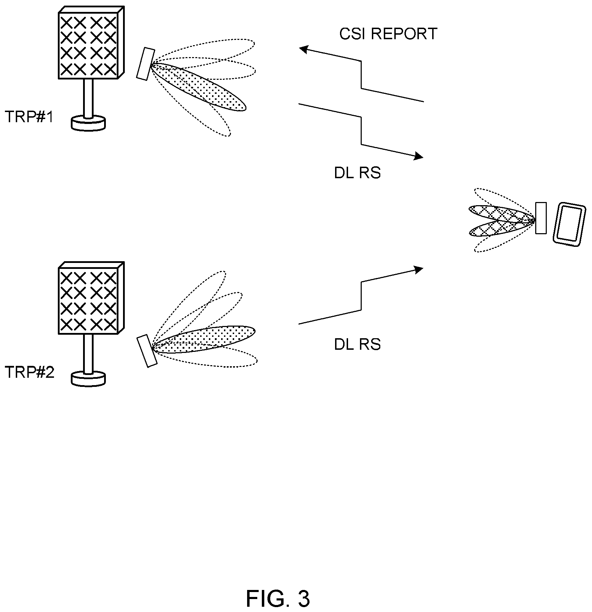

FIG. 3 shows an example of a case in which UCI corresponding to a reference signal (DL RS) transmitted from each of two TRPs (for example, TRP #1 and TRP #2) is transmitted by being multiplexed on the same (or one) PUCCH or PUSCH. The DL RS may be a CSI-RS, an SS/PBCH block, or the like. Note that the number of TRPs used for communication is not limited to this. The description herein illustrates a case in which the UCI is multiplexed on the PUCCH or the PUSCH transmitted to a certain TRP (for example, TRP #1). However, this is not restrictive.

When a plurality of pieces of CSI are transmitted in the same resource (for example, at least one of a frequency resource and a time resource), the UE may determine that the plurality of pieces of CSI collide with each other and control transmission operation for the CSI. For example, when time periods (for example, time occupancy) of a physical channel (the PUCCH or the PUSCH) scheduled for transmitting the CSI report overlap in at least one OFDM symbol in the same carrier, the UE may determine that the CSI collides with each other.

A plurality of CSI reports (or CSI types) transmitted from respective TRPs may include at least one of a periodic CSI (P-CSI) report, an aperiodic CSI (A-CSI) report, and a semi-persistent CSI (SP-CSI) report.

When the CSI reports corresponding to the plurality of TRPs collide with each other, the UE may control the CSI reports, based on certain priority corresponding to each CSI report. For example, the UE may control the CSI reports by applying at least one of priority rules 1 to 5 of the CSI reports described below.

Note that the following description illustrates a case in which control is performed so that the CSI having a smaller certain value of ($Pri_{iCSI}$ ($y$, $k$, $c$, $s$, $j_{TRP}$)) determined based on a CSI type, a TRP, or the like is preferentially transmitted. For example, when two pieces of CSI collide with each other, control is performed so that the CSI report having a relatively high value of $Pri_{iCSI}$ ($y$, $k$, $c$, $s$, $j_{TRP}$) is not transmitted (the CSI report having a low value of $Pri_{iCSI}$ ($y$, $k$, $c$, $s$, $j_{TRP}$) is transmitted). Note that $Pri_{iCSI}$ ($y$, $k$, $c$, $s$, $j_{TRP}$) shown below is merely an example, and is not restrictive. A part of the parameters may be replaced with another numerical value or the like, or another parameter may be added.

<Priority Rule 1>

In priority rule 1, the UE determines the priority of the CSI reports (for example, the priority of the CSI to be transmitted) by taking a TRP type into significant consideration. For example, the certain value ($Pri_{iCSI}$ ($y$, $k$, $c$, $s$, $j_{TRP}$)) being a reference of the priority of the CSI reports is defined as follows (Equation (1)).
[Math. 1]

Equation (1)

$$Pri_{iCSI}(y, k, c, s, j_{TRP}) = 6 \cdot N_{cells} \cdot M_s \cdot j_{TRP} + 2 \cdot N_{cells} \cdot M_s \cdot y + N_{cells} \cdot M_s \cdot k + M_s \cdot c + s$$

$N_{cells}$: Value configured with a higher layer parameter (for example, maxNrofServingCells)
$M_s$: Value configured with a higher layer parameter (for example, maxNrofCSI-ReportConfigurations)
$j_{TRP}$: TRP index
$y$: Value determined by a CSI report type

k: Value determined by contents transmitted with a CSI report

c: Serving cell index

s: Report configuration ID (reportConfigID)

$j_{TRP}$ may be a value configured with a higher layer parameter (for example, TRPID, DMRSgroupID, or the like). y may be determined by a CSI type, and for example, y = 0 may be configured for the aperiodic CSI report transmitted on the PUSCH, y = 1 may be configured for the semi-persistent CSI report transmitted on the PUSCH, y = 2 may be configured for the semi-persistent report transmitted on the PUCCH, and y = 3 may be configured for the periodic CSI report transmitted on the PUCCH. k may be determined by contents transmitted with the CSI report, and k = 0 may be configured for the CSI report for transmitting L1-RSRP, and k = 1 may be configured for the CSI report for not transmitting L1-RSRP.

In Equation (1), a coefficient (here, 6) of the parameter (for example, $j_{TRP}$) corresponding to the information related to the TRP (for example, the TRP index) is configured to be larger than a coefficient (here, 2) of the parameter (y) corresponding to the CSI type. In other words, in Equation (1), the certain value ($Pri_{iCSI}$ (y, k, c, s, $j_{TRP}$)) is determined based more on the TRP type (for example, the TRP index) than on the CSI type.

The description herein illustrates a case in which the CSI report corresponding to the TRP (for example, TRP #1) having a relatively small index is preferentially transmitted over the CSI report corresponding to the TRP (for example, TRP #2) having a relatively large index. However, this is not restrictive. Control may be performed so that the CSI report corresponding to the TRP having a larger index may be prioritized.

By determining the priority of the CSI reports using Equation (1), the CSI report to be reported based on the TRP can be determined. In this manner, when communication is performed by using a plurality of TRPs, and when the UE is located near a certain TRP, the CSI report can also be performed by selecting the CSI corresponding to the certain TRP.

<Priority Rule 2>

In priority rule 2, the UE determines the priority of the CSI reports (for example, the priority of the CSI to be transmitted) by taking a CSI type into significant consideration. For example, the certain value ($Pri_{iCSI}$ (y, k, c, s, $j_{TRP}$)) being a reference of the priority of the CSI reports is defined as follows (Equation (2)).

[Math. 2]

Equation (2)

$$Pri_{iCSI}(y, k, c, s, j_{TRP}) = N_{TRPs} \cdot 2 \cdot N_{cells} \cdot M_s \cdot y + 2 \cdot N_{cells} \cdot M_s \cdot j_{TRP} + N_{cells} \cdot M_s \cdot k + M_s \cdot c + s$$

$N_{TRPS}$: Maximum number of TRPs

$N_{cells}$: Value configured with a higher layer parameter (for example, maxNrofServingCells)

$M_s$: Value configured with a higher layer parameter (for example, maxNrofCSI-ReportConfigurations)

$j_{TRP}$: TRP index

y: Value determined by a CSI report type

k: Value determined by contents transmitted with a CSI report

c: Serving cell index

s: Report configuration ID (reportConfigID)

$N_{TRPs}$ may be a value configured with a higher layer parameter (for example, MAXNofTRP or the like). $j_{TRP}$, y, and k may be configured in a manner similar to Equation (1).

In Equation (2), a coefficient (here, 2) of the parameter (y) corresponding to the CSI type is configured to be the same as a coefficient (here, 2) of the parameter (for example, $j_{TRP}$) corresponding to the information related to the TRP, and further, y is multiplied by the maximum number of TRPs ($N_{TRPs}$). In other words, in Equation (2), the certain value ($Pri_{iCSI}$ (y, k, c, s, $j_{TRP}$)) is determined based more on the CSI type than on the TRP type (for example, the TRP index).

For example, the priority is configured in order of aperiodic CSI > semi-persistent CSI > periodic CSI. For the CSI reports of the same CSI type, the CSI report having a smaller corresponding TRP index may be prioritized.

By determining the priority of the CSI reports using Equation (2), the CSI report to be reported can be determined based on a type of the CSI report even when communication is performed with a plurality of TRPs.

<Priority Rule 3>

In priority rule 3, the UE determines the priority of the CSI reports (for example, the priority of the CSI to be transmitted) by taking a CSI type, a maximum number of TRPs, contents of the CSI report, a cell index, or the like into consideration. For example, the certain value ($\text{Pri}_{iCSI}$ (y, k, c, s, $j_{TRP}$)) being a reference of the priority of the CSI reports is defined as follows (Equation (3)).
[Math. 3]

Equation (3)

$$\text{Pri}_{iCSI}(y, k, c, s, j_{TRP}) = 2 \cdot N_{TRPs} \cdot N_{cells} \cdot M_s \cdot y + N_{TRPs} \cdot N_{cells} \cdot M_s \cdot k + N_{cells} \cdot M_s \cdot j_{TRP} + M_s \cdot c + s$$

$N_{TRPS}$: Maximum number of TRPs
$N_{cells}$: Value configured with a higher layer parameter (for example, maxNrofServingCells)
$M_s$: Value configured with a higher layer parameter (for example, maxNrofCSI-ReportConfigurations)
$j_{TRP}$: TRP index
y: Value determined by a CSI report type
k: Value determined by contents transmitted with a CSI report
c: Serving cell index
s: Report configuration ID (reportConfigID)

$N_{TRPs}$, $j_{TRP}$, y, and k may be configured in a manner similar to Equation (1).
In Equation (3), a coefficient (here, 2) of the parameter (y) corresponding to the CSI type is configured to be larger than a coefficient (here, 1) of the parameter (for example, $j_{TRP}$) corresponding to the information related to the TRP. In other words, in Equation (3), the certain value ($\text{Pri}_{iCSI}$ (y, k, c, s, $j_{TRP}$)) is determined based more on the CSI type than on the TRP type (for example, the TRP index).
For example, the priority is configured in order of aperiodic CSI > semi-persistent CSI > periodic CSI. For the CSI reports of the same CSI type, the priority is determined based on the contents transmitted with the CSI report and a corresponding TRP. For example, for the CSI reports of the same CSI type, the CSI report for transmitting L1-RSRP is prioritized over the CSI report for not transmitting L1-RSRP. In addition, when the contents transmitted with the CSI reports are the same, the CSI report having a smaller corresponding TRP index may be prioritized.
By determining the priority of the CSI reports using Equation (3), the CSI report to be reported can be determined based on a type of the CSI report even when communication is performed with a plurality of TRPs.

<Priority Rule 4>

In priority rule 4, the certain value ($\text{Pri}_{iCSI}$ (y, k, c, s, $j_{TRP}$)) being a reference of the priority of the CSI reports is defined as follows (Equation (4)).
[Math. 4]

Equation (4)

$$\text{Pri}_{iCSI}(y, k, c, s, j_{TRP}) = 2 \cdot N_{cells} \cdot N_{TRPs} \cdot M_s \cdot y + N_{cells} \cdot N_{TRPs} \cdot M_s \cdot k + N_{TRPs} \cdot M_s \cdot c + M_s \cdot j_{TRP} + s$$

$N_{TRPS}$: Maximum number of TRPs
$N_{cells}$: Value configured with a higher layer parameter (for example, maxNrofServingCells)
$M_s$: Value configured with a higher layer parameter (for example, maxNrofCSI-ReportConfigurations)
$j_{TRP}$: TRP index
y: Value determined by a CSI report type
k: Value determined by contents transmitted with a CSI report
c: Serving cell index
s: Report configuration ID (reportConfigID)

$N_{TRPs}$, $j_{TRP}$, y, and k may be configured in a manner similar to Equation (1).
For example, the priority is configured in order of aperiodic CSI > semi-persistent CSI > periodic CSI. For the CSI reports of the same CSI type, the priority is determined based on contents transmitted with the CSI report, the cell index, and a corresponding TRP. For example, for the CSI reports of the same CSI type, the CSI report for transmitting L1-RSRP is prioritized over the CSI report for not transmitting L1-RSRP. For the CSI reports of the same CSI type, the CSI report corresponding to a cell having a smaller index is prioritized. In addition, for the CSI reports having the same cell index, the CSI report having a smaller corresponding TRP index may be prioritized.

<Priority Rule 5>

In priority rule 5, for example, the certain value ($Pri_{iCSI}$ (y, k, c, s, $j_{TRP}$)) being a reference of the priority of the CSI reports is defined as follows (Equation (5)).
[Math. 5]

Equation (5)

$$Pri_{iCSI}(y, k, c, s, j_{TRP}) = 2 \cdot N_{cells} \cdot M_s \cdot N_{TRPs} \cdot y + N_{cells} \cdot M_s \cdot N_{TRPs} \cdot k + M_s \cdot N_{TRPs} \cdot c + N_{TRPs} \cdot s + j_{TRP}$$

$N_{TRPS}$: Maximum number of TRPs
$N_{cells}$: Value configured with a higher layer parameter (for example, maxNrofServingCells)
$M_s$: Value configured with a higher layer parameter (for example, maxNrofCSI-ReportConfigurations)
$j_{TRP}$: TRP index
y: Value determined by a CSI report type
k: Value determined by contents transmitted with a CSI report
c: Serving cell index
s: Report configuration ID (reportConfigID)

$N_{TRPs}$, $j_{TRP}$, y, and k may be configured in a manner similar to Equation (1).
For example, the priority is configured in order of aperiodic CSI > semi-persistent CSI > periodic CSI. For the CSI reports of the same CSI type, the priority is determined based on contents transmitted with the CSI report, the cell index, and a corresponding TRP. For example, for the CSI reports of the same CSI type, the CSI report for transmitting L1-RSRP is prioritized over the CSI report for not transmitting L1-RSRP. For the CSI reports of the same CSI type, the CSI report corresponding to a cell having a smaller index is prioritized. The CSI report having a smaller report configuration index is prioritized. In addition, for the CSI reports having the same report configuration index, the CSI report having a smaller corresponding TRP index may be prioritized.

(Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

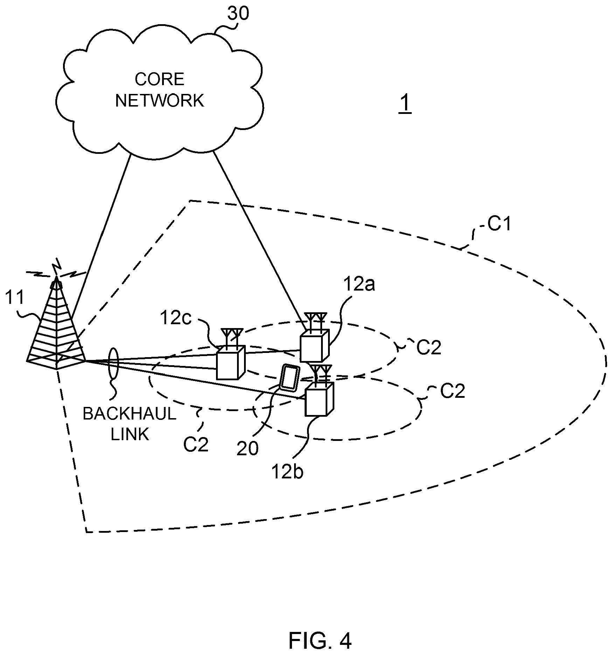

FIG. 4 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).
The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.
In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.
The radio communication system 1 may support dual connectivity between a plurality of base stations in the same RAT (for example, dual connectivity (NR-NR Dual Connectivity (NN-DC)) where both of an MN and an SN are base stations (gNB) of NR).
The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.
The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6GHz or less (sub-6GHz), and FR2 may be a frequency band which is higher than 24GHz (above-24GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data."

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cellspecific reference signal (CRS), a channel state informationreference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

(Base Station)

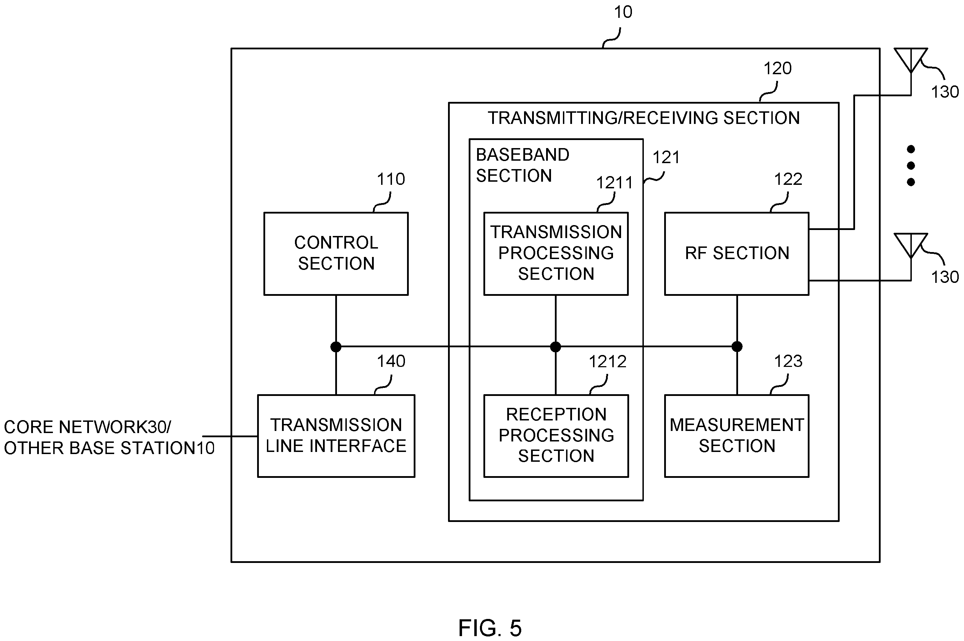

FIG. 5 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

Note that the transmitting/receiving section 120 transmits a DL signal (for example, the PDSCH, the DL reference signal, or the like). The transmitting/receiving section 120 receives uplink control information corresponding to the DL signal.

The control section 110 determines resource allocation order for the uplink control information and priority of the uplink control information, based on a type of the uplink control information and a corresponding transmission/reception point, and controls reception of the uplink control information.

(User Terminal)

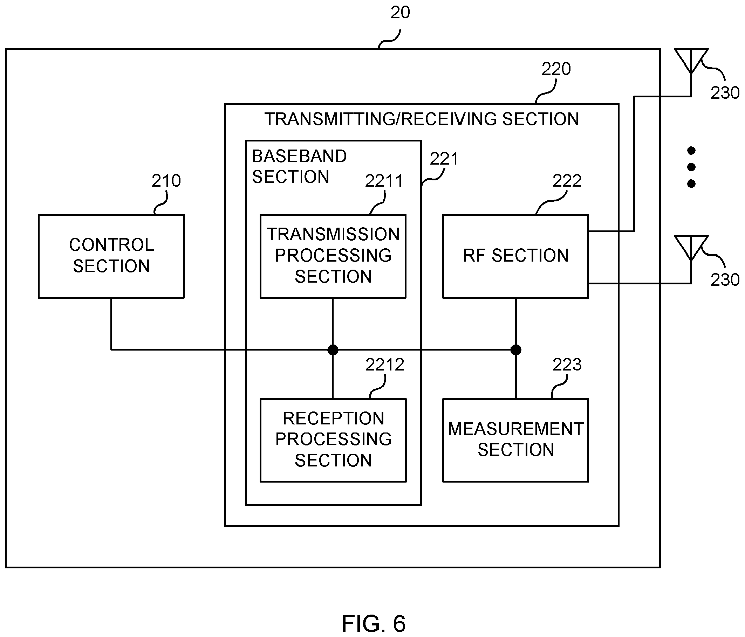

FIG. 6 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

Note that the transmitting/receiving section 220 transmits uplink control information (for example, the HARQ-ACK, the CSI, or the like) corresponding to a DL signal (for example, the PDSCH, the DL reference signal, or the like) transmitted from each of a plurality of transmission/reception points.

The control section 210 may determine at least one of resource allocation order for the uplink control information and mapping order, based on a type of the uplink control information and a corresponding transmission/reception point. The control section 210 may determine priority of the uplink control information, based on a type of the uplink control information (for example, the CSI) and a corresponding transmission/reception point.

When the uplink control information includes a plurality of pieces of at least one of channel state information part 1 and channel state information part 2, the control section 210 may determine the resource allocation order by prioritizing channel state information part 1 over channel state information part 2.

The control section 210 may allow use of an allocation resource of channel state information part 2 for mapping of a certain transmission confirmation signal.

The control section 210 may determine priority of the channel state information to be transmitted, based on a type of the channel state information and indices of the transmission/reception points. Alternatively, the control section 210 may determine priority of the channel state information to be transmitted, based on the number of transmission/reception points.

(Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

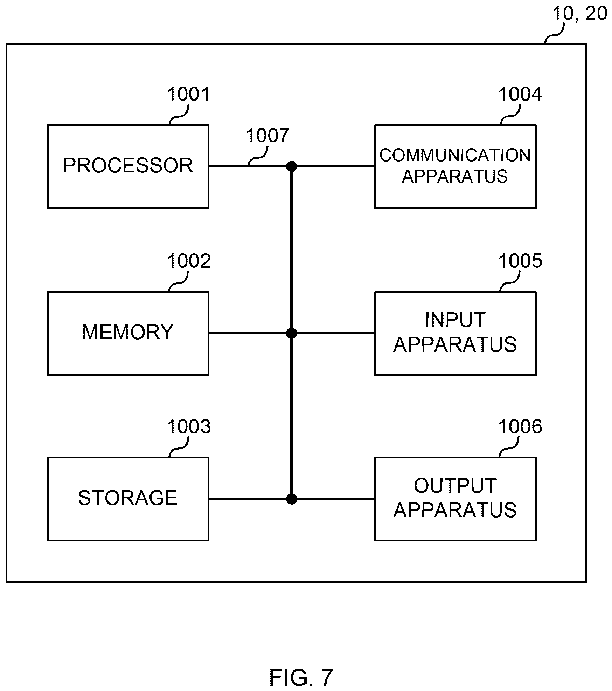

For example, a base station, a user terminal, and so on according to one embodiment of the present disclosure may function as a computer that executes the processes of the radio communication method of the present disclosure. FIG. 7 is a diagram to show an example of a hardware structure of the base station and the user terminal according to one embodiment. Physically, the above-described base station 10 and user terminal 20 may each be formed as computer an apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

(Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a certain signal/channel outside active BWPs. Note that a "cell," a "carrier," and so on in the present disclosure may be interpreted as a "BWP."

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of certain information (for example, reporting of "X holds") does not necessarily have to be reported explicitly, and can be reported implicitly (by, for example, not reporting this certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a "small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a moving object or a moving object itself, and so on. The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink" and "downlink" may be interpreted as the words corresponding to the terminal-toterminal communication (for example, "side"). For example, an uplink channel, a downlink channel and so on may be interpreted as a side channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be reordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

**Claims**

1. A user terminal comprising:

   a transmitting section that transmits uplink control information corresponding to a DL signal transmitted from each of a plurality of transmission/reception points; and
   a control section that determines at least one of resource allocation order for the uplink control information and priority of the uplink control information, based on a type of the uplink control information and a corresponding one of the plurality of transmission/reception points.

2. The user terminal according to claim 1, wherein
   when the uplink control information includes a plurality of pieces of at least one of channel state information part 1 and channel state information part 2, the control section determines the resource allocation order by prioritizing the channel state information part 1 over the channel state part 2.

3. The user terminal according to claim 2, wherein
   the control section allows use of an allocation resource of the channel state information part 2 for mapping of a certain transmission confirmation signal.

4. The user terminal according to any one of claims 1 to 3, wherein
   the control section determines priority of channel state information to be transmitted, based on a type of the channel state information and indices of the plurality of transmission/reception points.

5. The user terminal according to any one of claims 1 to 4, wherein
   the control section determines priority of channel state information to be transmitted, based on the number of the plurality of transmission/reception points.

6. A radio communication method comprising:

   transmitting uplink control information corresponding to a DL signal transmitted from each of a plurality of transmission/reception points; and
   determining at least one of resource allocation order for the uplink control information and priority of the uplink control information, based on a type of the uplink control information and a corresponding one of the plurality of transmission/reception points.

FIG. 1A

FIG. 1B

TRP#1

TRP#2

EP 3 914 005 A1

FIG. 2

CSI REPORT

TRP#1

DL RS

TRP#2

DL RS

FIG. 3

FIG. 4

FIG. 5

EP 3 914 005 A1

20

220

TRANSMITTING/RECEIVING SECTION

BASEBAND
SECTION

221

2211

210

TRANSMISSION
PROCESSING
SECTION

222

CONTROL
SECTION

RF SECTION

230

230

2212

223

RECEPTION
PROCESSING
SECTION

MEASUREMENT
SECTION

FIG. 6

10, 20

1001

PROCESSOR

1007

1004

COMMUNICATION
APPARATUS

1002

MEMORY

1005

INPUT
APPARATUS

1003

STORAGE

1006

OUTPUT
APPARATUS

FIG. 7

## INTERNATIONAL SEARCH REPORT

| International application No. |
| --- |
| PCT/JP2019/001153 |

**A. CLASSIFICATION OF SUBJECT MATTER**
Int.Cl. H04W72/04(2009.01)i, H04W28/16(2009.01)i, H04W72/12(2009.01)i

According to International Patent Classification (IPC) or to both national classification and IPC

**B. FIELDS SEARCHED**

Minimum documentation searched (classification system followed by classification symbols)
Int.Cl. H04W72/04, H04W28/16, H04W72/12

Documentation searched other than minimum documentation to the extent that such documents are included in the fields searched

| | |
| --- | --- |
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y<br>A | WO 2018/203409 A1 (NTT DOCOMO, INC.) 08 November 2018, paragraphs [0027], [0035], [0091] (Family: none) | 1-2, 4, 6<br>3, 5 |
| Y<br>A | JP 2018-191288 A (ASUSTEK COMP. INC.) 29 November 2018, paragraph [0055] & US 2018/0324641 A1, paragraph [0549] & EP 3399724 A1 & CN 108811175 A & KR 10-2018-0122951 A | 1-2, 4, 6<br>3, 5 |
| A | NTT DOCOMO, "UCI enhancements for URLLC", 3GPP TSG RAN WG1 Meeting #95 R1-1813325, 16 November 2018, whole document | 1-6 |

☐ Further documents are listed in the continuation of Box C.      ☐ See patent family annex.

| | |
| --- | --- |
| *    Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
| --- | --- |
| 08 March 2019 (08.03.2019) | 26 March 2019 (26.03.2019) |

| Name and mailing address of the ISA/<br>　　Japan Patent Office<br>　　3-4-3, Kasumigaseki, Chiyoda-ku,<br>　　Tokyo 100-8915, Japan | Authorized officer<br><br>Telephone No. |
| --- | --- |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Evolved Universal Terrestrial Radio Access (E-UTRA) and Evolved Universal Terrestrial Radio Access Network (E-UTRAN); Overall description; Stage 2 (Release 8). *3GPP TS 36.300 V8.12.0,* April 2010